# FASCICULE DE BREVET EUROPEEN

(11) **EP 2 742 834 B1**
(45) Date de publication et mention de la délivrance du brevet: **02.05.2018**
(21) Numéro de dépôt: 13196547.7
(22) Date de dépôt: 10.12.2013
(51) Int. Cl.: A47J 36/06, A47J 43/07

(54) **COUVERCLE D'APPAREIL ELECTROMENAGER COMPORTANT UNE FACE INTERNE PRESENTANT UN ETAT DE SURFACE AMELIORE**
DECKEL EINES ELEKTROHAUSHALTSGERÄTS, DER EINE INNENSEITE MIT EINEM VERBESSERTEN OBERFLÄCHENSTATUS AUFWEIST
COVER OF A HOUSEHOLD APPLIANCE COMPRISING AN INNER SURFACE HAVING AN IMPROVED SURFACE CONDITION

(30) Priorité: 14.12.2012 FR 1262109
(43) Date de publication de la demande: 18.06.2014
(73) Titulaire: SEB S.A., 69130 Ecully (FR)
(72) Inventeur: Ferrer, Florent, 65310 LALOUBERE (FR); Pere-Sarrailhe, Sabine, 64460 BENTAYOU-SEREE (FR)
(74) Mandataire: Cémeli, Eric Philippe Laurent

(56) Documents cités:
- EP-A1- 2 368 470
- FR-A1- 2 764 792
- US-A- 5 161 711

## Description

La présente invention concerne le domaine technique des appareils électroménagers pour réaliser des préparations alimentaires et/ou cosmétiques, comprenant un couvercle comportant au moins un tenon interne pour commander le fonctionnement de l'appareil.

La présente invention concerne plus particulièrement les couvercles du type précité, leur procédé d'obtention, ainsi que les appareils comportant un couvercle du type précité.

Le document EP 2 368 470 divulgue un appareil électroménager du type précité, dans lequel le couvercle comporte trois tenons internes engagés dans des logements de réception du boîtier de l'appareil pour commander le fonctionnement de l'appareil par appui sur le couvercle. Un tel couvercle peut être réalisé en une seule pièce, notamment par moulage de matière plastique. Toutefois l'obtention par moulage d'un tel couvercle comportant des tenons internes implique de déplacer des tiroirs de moulage sur la paroi interne du couvercle, pour pouvoir libérer le couvercle du moule. Il en résulte la présence de traces de tiroirs de moulage sur la face intérieure du couvercle. Ainsi l'état de surface de la face interne du couvercle n'est pas tout à fait net, et peut comporter des aspérités susceptibles de retenir des ingrédients si un tel couvercle est utilisé comme contenant.

Un objet de la présente invention est de proposer un couvercle d'appareil électroménager pour réaliser des préparations alimentaires et/ou cosmétiques, comportant au moins un tenon interne pour commander le fonctionnement de l'appareil, dont la face interne soit dépourvue de traces de moulage.

Un objet de la présente invention est de proposer un appareil électroménager pour réaliser des préparations alimentaires et/ou cosmétiques, comprenant un couvercle comportant au moins un tenon interne pour commander le fonctionnement de l'appareil, dont la face interne soit dépourvue de traces de moulage.

Un autre objet de la présente invention est de proposer un procédé de réalisation d'un couvercle d'appareil électroménager pour réaliser des préparations alimentaires et/ou cosmétiques, comportant au moins un tenon interne pour commander le fonctionnement de l'appareil, dont la face interne soit dépourvue de traces de moulage.

Ces objets sont atteints avec un couvercle amovible d'appareil électroménager pour réaliser des préparations alimentaires et/ou cosmétiques, ledit couvercle comportant au moins un tenon interne pour commander le fonctionnement de l'appareil, du fait que le couvercle comporte une paroi intérieure annulaire présentant au moins un passage traversant ladite paroi intérieure, ainsi qu'une paroi extérieure en matière plastique surmoulée autour de la paroi intérieure, et que ledit tenon interne est issu de la paroi extérieure et s'étend au travers du passage au-delà de la paroi intérieure. Pour réaliser au moins un tenon interne de commande à l'intérieur d'un couvercle, il est nécessaire d'utiliser un tiroir lors du moulage de la paroi du couvercle portant le tenon interne. La réalisation de tenons par surmoulage d'une paroi extérieure sur une paroi intérieure préexistante permet d'éviter la présence de traces de tiroir de moulage sur la face interne du couvercle. La face interne du couvercle peut ainsi présenter un état de surface dépourvu d'aspérités. Cette disposition permet de valoriser le couvercle en l'utilisant comme pot de service, pour recueillir la préparation réalisée avec l'appareil.

Avantageusement, ledit passage forme une encoche dans une bordure de la paroi intérieure. Cette disposition permet de faciliter la réalisation du couvercle. Cette disposition permet également de simplifier la commande de l'appareil.

Avantageusement encore, la paroi intérieure forme un montant latéral s'incurvant en direction d'un fond du couvercle. Ainsi la paroi intérieure n'est pas tubulaire, mais peut être portée par la portion incurvée du montant latéral. Cette disposition permet de faciliter la mise en place et le maintien de la paroi intérieure dans le moule lors de l'opération de surmoulage de la paroi extérieure.

Avantageusement alors, le montant latéral présente une portion incurvée ménageant une ouverture de fond. Cette disposition permet de faciliter la manipulation de la paroi intérieure avant l'opération de surmoulage.

Avantageusement alors, la paroi extérieure s'étend dans l'ouverture de fond dans le prolongement de la paroi intérieure. Ainsi la face interne de la paroi extérieure est affleurante avec la face interne de la paroi intérieure. Cette disposition permet de renforcer la cohésion du couvercle tout en évitant la présence d'aspérités susceptibles de retenir la préparation.

Selon une forme de réalisation avantageuse, la paroi intérieure appartient à une pièce moulée. En alternative, la paroi intérieure pourrait notamment appartenir à une pièce emboutie.

Avantageusement alors, la paroi intérieure est réalisée en matière plastique.

Avantageusement encore, le couvercle comporte une paroi de fond et peut être disposé en position retournée sur la paroi de fond. Cette disposition facilite l'utilisation du couvercle comme pot de service.

Selon une forme de réalisation avantageuse facilitant la commande de l'appareil, le couvercle présente au moins trois tenons internes issus de la paroi extérieure, et de préférence trois tenons internes. Une telle disposition permet en effet d'obtenir un couvercle dont les tenons internes sont portés par l'appareil.

Ces objets sont atteints également avec un appareil électroménager pour réaliser des préparations alimentaires et/ou cosmétiques, comportant un boîtier supportant un récipient de travail recevant un outil de travail rotatif, ainsi qu'un couvercle amovible monté sur le boîtier, le boîtier renfermant un moteur pour l'entraînement de l'outil de travail rotatif, le couvercle comportant au moins un tenon interne pour commander le fonctionnement du moteur lorsque le couvercle coiffe le récipient de travail, le couvercle étant mobile sur le boîtier entre une position de repos dans laquelle le moteur est à l'arrêt et une position de commande dans laquelle le moteur est en fonctionnement, dans lequel le couvercle est conforme à l'une au moins des caractéristiques précitées. Ainsi le fonctionnement du moteur est commandé par un mouvement du couvercle entre la position de repos et la position de commande. Une telle disposition permet de faciliter un fonctionnement par impulsions de l'appareil.

Avantageusement alors, le boîtier comporte au moins un élément de rappel élastique pour écarter le couvercle de la position de commande. Cette disposition facilite le fonctionnement par impulsions de l'appareil.

Selon une forme de réalisation avantageuse, la position de repos du couvercle est une position relevée et la position de commande du couvercle est une position abaissée. Cette disposition facilite l'utilisation de l'appareil, en permettant une commande de fonctionnement utilisant une seule main.

Avantageusement alors, le couvercle en position de repos repose sur une couronne agencée dans le boîtier, la couronne est montée mobile contre ledit élément de rappel élastique, et une pression verticale exercée manuellement sur le couvercle déplace la couronne pour actionner un interrupteur et commander la mise en marche du moteur. Cette disposition facilite l'obtention d'un déplacement en translation du couvercle.

Selon une forme de réalisation, l'outil de travail rotatif est solidaire du récipient de travail. Une telle disposition est bien adaptée à l'utilisation d'ingrédients liquides ou semi-liquides. Le couvercle selon l'invention peut servir de contenant pour utiliser la préparation, en s'affranchissant du récipient de travail comportant l'outil de travail rotatif.

Ces objets sont atteints également avec un procédé d'obtention d'un couvercle d'appareil électroménager pour réaliser des préparations alimentaires et/ou cosmétiques, le couvercle étant conforme à l'une au moins des caractéristiques précitées, ledit procédé comprenant les étapes suivantes :
- moulage d'une paroi intérieure annulaire du couvercle présentant au moins un passage traversant ladite paroi intérieure,
- surmoulage d'une paroi extérieure autour de la paroi intérieure avec création d'au moins un tenon interne issu de la paroi extérieure et s'étendant au travers du passage au-delà de la paroi intérieure.

L'invention sera mieux comprise à l'étude d'un exemple de réalisation, pris à titre nullement limitatif, illustré dans les figures annexées, dans lesquelles :
- la figure 1 est une vue en perspective et en éclaté d'un exemple de réalisation d'un appareil électroménager pour réaliser des préparations alimentaires et/ou cosmétiques, comportant un couvercle selon l'invention,
- la figure 2 est une vue en élévation et en coupe de l'appareil électroménager pour réaliser des préparations alimentaires et/ou cosmétiques illustré sur la figure 1,
- la figure 3 est une vue en élévation et en coupe du couvercle de l'appareil illustré sur les figures 1 et 2,
- la figure 4 est une vue en perspective de dessus d'une paroi intérieure du couvercle illustré sur la figure 3, avant surmoulage,
- la figure 5 est une vue en perspective de dessus d'une paroi extérieure du couvercle illustré sur la figure 3, après surmoulage,
- la figure 6 est une vue en perspective et en position retournée du couvercle illustré sur la figure 3.

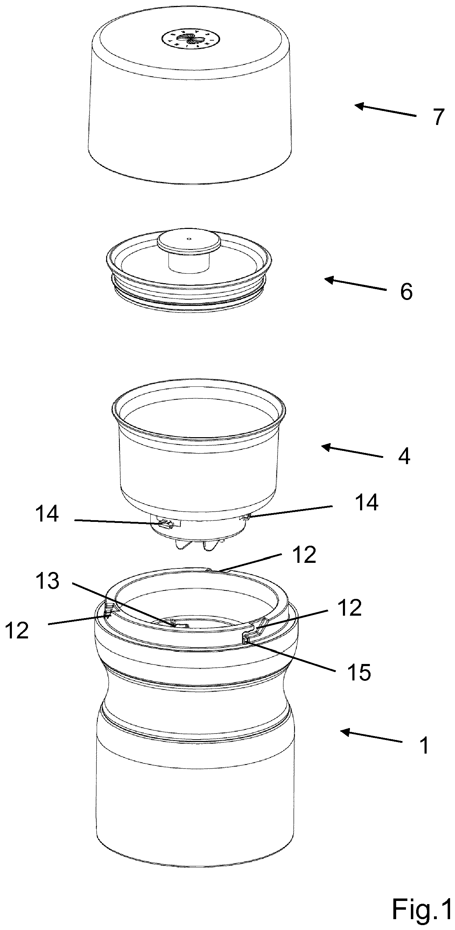

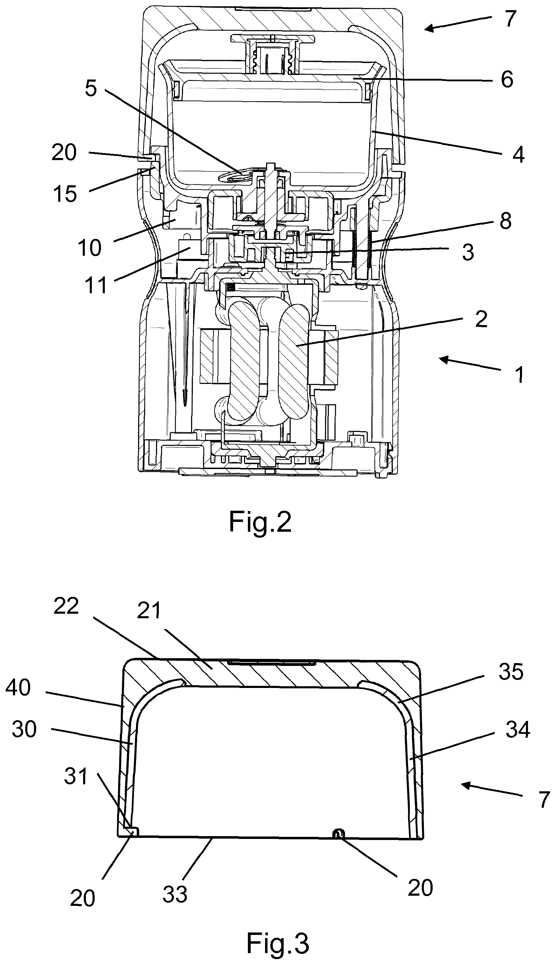

L'appareil électroménager pour réaliser des préparations alimentaires et/ou cosmétiques illustré sur les figures 1 et 2 comporte un boîtier 1 supportant un récipient de travail 4 recevant un outil de travail rotatif 5, ainsi qu'un couvercle 7 amovible monté sur le boîtier 1. Le boîtier 1 renferme un moteur 2 pour l'entraînement de l'outil de travail rotatif 5.

Plus particulièrement dans l'exemple de réalisation illustré sur les figures, le récipient de travail 4 est amovible par rapport au boîtier 1. Le récipient de travail 4 est verrouillé par baïonnette sur le boîtier 1 au moyen de tenons externes 14 engagés dans des encoches internes 13 du boîtier 1. L'outil de travail rotatif 5 est solidaire du récipient de travail 4. Le boîtier 1 présente un organe d'entraînement supérieur 3 pour entraîner l'outil de travail rotatif 5. Un couvercle interne d'étanchéité 6 est prévu pour fermer le récipient de travail 4.

Le couvercle 7 comporte au moins un tenon interne 20 pour commander le fonctionnement du moteur 2 lorsque le couvercle 7 coiffe le récipient de travail 4, tel que visible sur la figure 2.

Dans l'exemple de réalisation illustré sur les figures, le couvercle 7 présente une géométrie de révolution et comporte trois tenons internes 20 agencés à 120° les uns des autres. Les tenons internes 20 peuvent être engagés dans des encoches externes 12 du boîtier 1, pour verrouiller le couvercle 7 par baïonnette sur le boîtier 1 après un mouvement de rotation. Les tenons internes 20 engagés au fond des encoches externes 12 reposent sur des organes de commande 15.

Le couvercle 7 est mobile sur le boîtier 1 entre une position de repos, dans laquelle le moteur 2 est à l'arrêt, et une position de commande, dans laquelle le moteur 2 est en fonctionnement.

Dans l'exemple de réalisation illustré sur les figures, la position de repos du couvercle 7 est une position relevée et la position de commande du couvercle 7 est une position abaissée. Les organes de commande 15 sont mobiles verticalement par rapport au boîtier 1 et appartiennent à une couronne 10 agencée dans le boîtier 1. La couronne 10 est montée mobile contre au moins un élément de rappel élastique 8 et peut être déplacée par appui sur le couvercle 7 pour actionner un interrupteur 11 commandant la mise en marche du moteur 2. Le boîtier 1 comporte ainsi au moins un élément de rappel élastique 8 pour écarter le couvercle 7 de la position de commande. La couronne 10 est avantageusement portée par trois éléments de rappel élastiques 8.

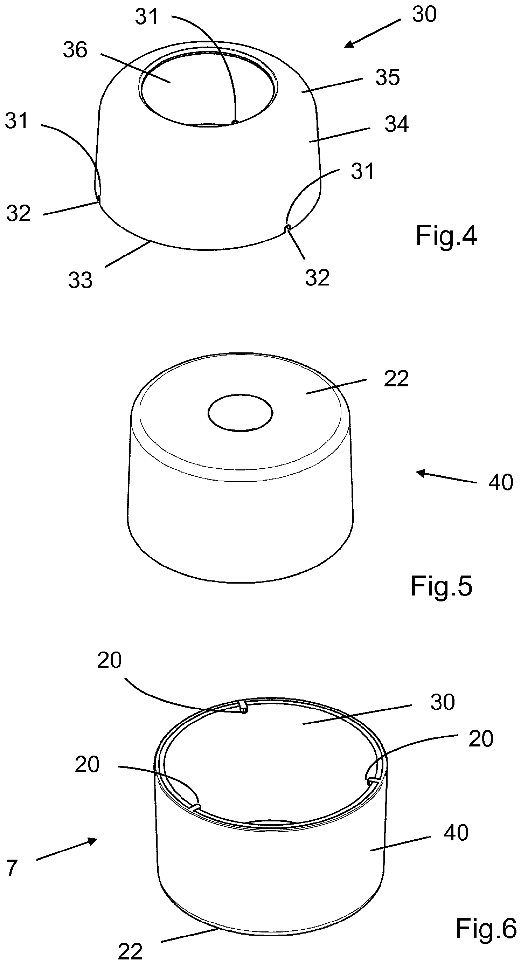

Le couvercle 7 selon l'invention illustré sur les figures 3 et 6 comporte une paroi intérieure 30 annulaire ainsi qu'une paroi extérieure 40 en matière plastique surmoulée autour de la paroi intérieure 30.

Tel que visible sur les figures 3 et 4, la paroi intérieure 30 présente au moins un passage 31 traversant ladite paroi intérieure 30.

Tel que visible sur les figures 3 et 5, le couvercle 7 comporte une paroi de fond 22 présentant une surface d'appui sensiblement plane. Le couvercle 7 peut ainsi être disposé en position retournée sur la paroi de fond 22, tel que représenté sur la figure 6.

Tel que visible sur les figures 3 et 6, les tenons internes 20 sont issus de la paroi extérieure 40 et s'étendent au travers des passages 31 au-delà de la paroi intérieure 30.

Plus particulièrement dans l'exemple de réalisation illustré, chacun des passages 31 forme une encoche 32 dans une bordure 33 de la paroi intérieure 30. Les tenons internes 20 s'étendent à l'intérieur du couvercle 7, sans dépasser de la bordure 33. De plus, tel que visible sur les figures 3 et 4, la paroi intérieure 30 forme un montant latéral 34 s'incurvant en direction d'un fond 21 du couvercle 7. Le montant latéral 34 présente une portion incurvée 35 ménageant une ouverture de fond 36. La paroi extérieure 40 s'étend dans l'ouverture de fond 36 dans le prolongement de la paroi intérieure 30.

Selon un mode de réalisation préféré, la paroi intérieure 30 appartient à une pièce moulée et est réalisée en matière plastique. La paroi intérieure 30 est par exemple réalisée en copolyester Tritan™ de Eastman, par exemple blanc irisé. La paroi extérieure 40 peut être réalisée par surmoulage de copolyester Tritan™ de Eastman, par exemple transparent, avec création des tenons internes 20.

L'invention concerne également un procédé d'obtention du couvercle 7 d'appareil électroménager pour réaliser des préparations alimentaires et/ou cosmétiques, ledit procédé comprenant les étapes suivantes :
- Moulage de la paroi intérieure 30 annulaire du couvercle 7 présentant au moins un passage 31 traversant ladite paroi intérieure 30,
- Surmoulage de la paroi extérieure 40 autour de la paroi intérieure 30 avec création d'au moins un tenon interne 20 issu de la paroi extérieure 40 et s'étendant au travers du passage 31 au-delà de la paroi intérieure 30.

Le fonctionnement de la présente invention est le suivant.

L'utilisateur met en place le récipient de travail 4 sur le boîtier 1, ajoute les ingrédients, ferme le récipient de travail 4 avec le couvercle interne d'étanchéité 6, et positionne le couvercle 7 pour coiffer le récipient de travail 4. Le couvercle 7 en position de repos repose sur la couronne 10 agencée dans le boîtier 1. Une pression verticale exercée manuellement sur le couvercle 7 déplace la couronne 10 pour actionner l'interrupteur 11 et commander la mise en marche du moteur 2. Si désiré l'utilisateur peut réaliser plusieurs commandes par impulsions en fonction de la texture désirée. L'utilisateur retire ensuite le couvercle 7 et le couvercle interne d'étanchéité 6 et peut retourner le couvercle 7 sur la paroi de fond 22 pour verser la préparation si désiré à l'aide d'une spatule. Le couvercle 7 peut ainsi être utilisé comme pot de service.

A titre de variante, le couvercle 7 comporte au moins un tenon interne 20 issu de la paroi extérieure 40 et s'étendant au travers du passage 31 au-delà de la paroi intérieure 30, et de préférence entre trois et six tenons internes 20 issus de la paroi extérieure 40.

A titre de variante, la paroi interne 30 du couvercle 7 n'est pas nécessairement obtenue par moulage, notamment de matière plastique, mais peut par exemple être obtenue par emboutissage d'une pièce métallique.

A titre de variante, le ou les passages 31 ne sont pas nécessairement formés dans la bordure 33 de la paroi intérieure 30 du couvercle 7, mais peu(ven)t notamment être formé(s) par une ou des perforations de la paroi intérieure 30.

A titre de variante, le ou les organes de commande 15 n'appartien(nen)t pas nécessairement à une couronne 10. Le boîtier 1 peut par exemple comporter un organe de commande appartenant à une tige de sécurité actionnant un interrupteur.

A titre de variante, le couvercle 7 n'est pas nécessairement déplacé verticalement contre au moins un élément de rappel élastique 8 pour atteindre la position de commande. Le couvercle 7 peut par exemple être tourné sur le boîtier 1, si désiré contre au moins un élément de rappel élastique 8, pour que les tenons internes 20 engagés dans les encoches externes 12 déplacent au moins un élément de commande pour actionner un interrupteur 11 commandant la mise en marche du moteur 2.

A titre de variante, la paroi intérieure 30 ne présente pas nécessairement une ouverture de fond 36. La paroi intérieure 30 peut notamment être dépourvue d'ouverture de fond et/ou présenter plusieurs ouvertures de fond et/ou au moins une ouverture latérale et/ou de fond.

A titre de variante, le récipient de travail 4 n'est pas nécessairement monté amovible sur le boîtier 1.

La présente invention n'est nullement limitée à l'exemple de réalisation décrit et à ses variantes, mais englobe de nombreuses modifications dans le cadre des revendications.

## Revendications

1. Couvercle (7) amovible d'appareil électroménager pour réaliser des préparations alimentaires et/ou cosmétiques, ledit couvercle (7) comportant au moins un tenon interne (20) pour commander le fonctionnement de l'appareil, **caractérisé en ce que** le couvercle (7) comporte une paroi intérieure (30) annulaire présentant au moins un passage (31) traversant ladite paroi intérieure (30), ainsi qu'une paroi extérieure (40) en matière plastique surmoulée autour de la paroi intérieure (30), et **en ce que** ledit tenon interne (20) est issu de la paroi extérieure (40) et s'étend au travers du passage (31) au-delà de la paroi intérieure (30).

2. Couvercle (7) selon la revendication 1, **caractérisé en ce que** ledit passage (31) forme une encoche (32) dans une bordure (33) de la paroi intérieure (30).

3. Couvercle (7) selon l'une des revendications 1 ou 2, **caractérisé en ce que** la paroi intérieure (30) forme un montant latéral (34) s'incurvant en direction d'un fond (21) du couvercle (7).

4. Couvercle (7) selon la revendication 3, **caractérisé en ce que** le montant latéral (34) présente une portion incurvée (35) ménageant une ouverture de fond (36).

5. Couvercle (7) selon la revendication 4, **caractérisé en ce que** la paroi extérieure (40) s'étend dans l'ouverture de fond (36) dans le prolongement de la paroi intérieure (30).

6. Couvercle (7) selon l'une des revendications 1 à 5, **caractérisé en ce que** la paroi intérieure (30) appartient à une pièce moulée.

7. Couvercle (7) selon la revendication 6, **caractérisé en ce que** la paroi intérieure (30) est réalisée en matière plastique.

8. Couvercle (7) selon l'une des revendications 1 à 7, **caractérisé en ce que** le couvercle (7) comporte une paroi de fond (22) et peut être disposé en position retournée sur la paroi de fond (22).

9. Couvercle (7) selon l'une des revendications 1 à 8, **caractérisé en ce que** le couvercle (7) présente au moins trois tenons internes (20) issus de la paroi extérieure (40), et de préférence trois tenons internes (20).

10. Appareil électroménager pour réaliser des préparations alimentaires et/ou cosmétiques, comportant un boîtier (1) supportant un récipient de travail (4) recevant un outil de travail rotatif (5), ainsi qu'un couvercle (7) amovible monté sur le boîtier (1), le boîtier (1) renfermant un moteur (2) pour l'entraînement de l'outil de travail rotatif (5), le couvercle (7) comportant au moins un tenon interne (20) pour commander le fonctionnement du moteur (2) lorsque le couvercle (7) coiffe le récipient de travail (4), le couvercle (7) étant mobile sur le boîtier (1) entre une position de repos dans laquelle le moteur (2) est à l'arrêt et une position de commande dans laquelle le moteur (2) est en fonctionnement, **caractérisé en ce que** le couvercle (7) est conforme à l'une des revendications 1 à 9.

11. Appareil électroménager selon la revendication 10, **caractérisé en ce que** le boîtier (1) comporte au moins un élément de rappel élastique (8) pour écarter le couvercle (7) de la position de commande.

12. Appareil électroménager selon la revendication 11, **caractérisé en ce que** la position de repos du couvercle (7) est une position relevée et **en ce que** la position de commande du couvercle (7) est une position abaissée.

13. Appareil électroménager selon la revendication 12, dans lequel le couvercle (7) est conforme à la revendication 9, **caractérisé en ce que** le couvercle (7) en position de repos repose sur une couronne (10) agencée dans le boîtier (1), **en ce que** la couronne (10) est montée mobile contre ledit élément de rappel élastique (8), et **en ce qu'**une pression verticale exercée manuellement sur le couvercle (7) déplace la couronne (10) pour actionner un interrupteur (11) et commander la mise en marche du moteur (2).

14. Appareil électroménager selon l'une des revendications 10 à 13, **caractérisé en ce que** l'outil de travail rotatif (5) est solidaire du récipient de travail (4).

15. Procédé d'obtention d'un couvercle (7) d'appareil électroménager pour réaliser des préparations alimentaires et/ou cosmétiques selon l'une des revendications 1 à 9, comprenant les étapes suivantes :
- moulage d'une paroi intérieure (30) annulaire du couvercle (7) présentant au moins un passage (31) traversant ladite paroi intérieure (30),
- surmoulage d'une paroi extérieure (40) autour de la paroi intérieure (30) avec création d'au moins un tenon interne (20) issu de la paroi extérieure (40) et s'étendant au travers du passage (31) au-delà de la paroi intérieure (30).

## Patentansprüche

1. Abnehmbare Abdeckung (7) für ein Elektrohaushaltgerät zum Herstellen von Lebensmittel- und / oder Kosmetikzubereitungen, wobei die Abdeckung (7) mindestens einen inneren Zapfen (20) aufweist, um den Betrieb der Vorrichtung zu steuern, **dadurch gekennzeichnet, dass** die Abdeckung (7) eine ringförmige Innenwand (30), die zumindest einen Durchgang (31) aufweist, der durch die Innenwand (30) hindurchgeht, sowie eine Außenwand (40) aus Kunststoffmaterial aufweist, die um die Innenwand (30) umspritzt ist, und dass der innere Zapfen (20) von der Außenwand (40) ausgeht und sich durch den Durchgang (31) über die Innenwand (30) erstreckt.

2. Abdeckung (7) nach Anspruch 1, **dadurch gekennzeichnet, dass** der Durchgang (31) eine Kerbe (32) in einer Umrandung (33) der Innenwand (30) bildet.

3. Abdeckung (7) nach einem der Ansprüche 1 oder 2, **dadurch gekennzeichnet, dass** die Innenwand (30) einen seitlichen Pfosten (34) bildet, der in Richtung eines Bodens (21) der Abdeckung (7) gekrümmt ist.

4. Abdeckung (7) nach Anspruch 3, **dadurch gekennzeichnet, dass** der seitliche Pfosten (34) einen gekrümmten Abschnitt (35) aufweist, in dem eine Bodenöffnung (36) untergebracht ist.

5. Abdeckung (7) nach Anspruch 4, **dadurch gekennzeichnet, dass** die Außenwand (40) sich in der Bodenöffnung (36) in der Verlängerung der Innenwand (30) erstreckt.

6. Abdeckung (7) nach einem der Ansprüche 1 bis 5, **dadurch gekennzeichnet, dass** die Innenwand (30) zu einem gespritzten Teil gehört.

7. Abdeckung (7) nach Anspruch 6, **dadurch gekennzeichnet, dass** die Innenwand (30) aus Kunststoffmaterial hergestellt ist.

8. Abdeckung (7) nach einem der Ansprüche 1 bis 7, **dadurch gekennzeichnet, dass** die Abdeckung (7) eine Bodenwand (22) aufweist und in umgedrehter Position auf der Bodenwand (22) angeordnet sein kann.

9. Abdeckung (7) nach einem der Ansprüche 1 bis 8, **dadurch gekennzeichnet, dass** die Abdeckung (7) zumindest drei interne Zapfen (20), die von der Außenwand (40) ausgehen, und vorzugsweise drei innere Zapfen (20) aufweist.

10. Elektrohaushaltsgerät zum Herstellen von Lebensmittel- und / oder Kosmetikzubereitungen, aufweisend ein Gehäuse (1), das einen Arbeitsbehälter (4) trägt, der ein drehbares Arbeitswerkzeug (5) aufnimmt, sowie eine Abdeckung (7), die abnehmbar auf dem Gehäuse (1) angebracht ist, wobei das Gehäuse (1) einen Motor (2) für das Antreiben des drehbaren Arbeitswerkzeugs (5) umschließt, wobei die Abdeckung (7) mindestens einen inneren Zapfen (20) zum Steuern des Betriebes des Motors (2) aufweist, wenn die Abdeckung (7) den Arbeitsbehälter (4) abdeckt, wobei die Abdeckung (7) auf dem Gehäuse (1) zwischen einer Ruheposition, in der der Motor (2) außer Betrieb ist, und einer Steuerposition beweglich ist, in der der Motor (2) in Betrieb ist, **dadurch gekennzeichnet, dass** die Abdeckung (7) in Übereinstimmung mit einem der Ansprüche 1 bis 9 ist.

11. Elektrohaushaltsgerät nach Anspruch 10, **dadurch gekennzeichnet, dass** das Gehäuse (1) zumindest ein elastisches Rückstellelement (8) zum Beabstanden der Abdeckung (7) von der Steuerposition aufweist.

12. Elektrohaushaltsgerät nach Anspruch 11, **dadurch gekennzeichnet, dass** die Ruheposition der Abdeckung (7) eine angehobene Position ist, und dass die Steuerposition (7) der Abdeckung eine abgesenkte Position ist.

13. Elektrohaushaltsgerät nach Anspruch 12, wobei die Abdeckung (7) in Übereinstimmung mit Anspruch 9 ist, **dadurch gekennzeichnet, dass** die Abdeckung (7) in der Ruheposition auf einem Ring (10) aufliegt, der in dem Gehäuse (1) angeordnet ist, dass der Ring (10) gegen das elastische Rückstellelement (8) beweglich angebracht ist, und dass ein vertikaler Druck, der manuell auf die Abdeckung (7) ausgeübt wird, den Ring (10) zum Betätigen eines Schalters (11) und Steuern des Einschaltens des Motors (2) verschiebt.

14. Elektrohaushaltgerät nach einem der Ansprüche 10 bis 13, **dadurch gekennzeichnet, dass** das drehbare Arbeitswerkzeug (5) fest mit dem Arbeitsbehälter (4) verbunden ist.

15. Verfahren zum Erhalt einer Abdeckung (7) eines Elektrohaushaltgeräts zum Herstellen von Lebensmittel- und / oder Kosmetikzubereitungen nach einem der Ansprüche 1 bis 9, umfassend die folgenden Schritte:
- Spritzen einer ringförmigen Innenwand (30) der Abdeckung (7), die mindestens einen Durchgang (31) aufweist, der durch die Innenwand (30) hindurchgeht,
- Umspritzen einer Außenwand (40) um die Innenwand (30) mit der Schaffung von mindestens einem inneren Zapfen (20), der von der Außenwand (40) ausgeht und sich durch den Durchgang (31) über die Innenwand (30) erstreckt.

## Claims

1. Removable lid (7) on a domestic electrical appliance for producing food and/or cosmetic preparations, said lid (7) comprising at least one internal tenon (20) for controlling the functioning of the appliance, **characterised in that** the lid (7) comprises an annular internal wall (30) having at least one passage (31) passing through said internal wall (30), as well as an external wall (40) made from plastics material moulded on and round the internal wall (30), and **in that** said internal tenon (20) issues from the external wall (40) and extends through the passage (31) beyond the internal wall (30).

2. Lid (7) according to claim 1, **characterised in that** said passage (31) forms a recess (32) in a rim (33) of the internal wall (30).

3. Lid (7) according to either claim 1 or claim 2, **characterised in that** the internal wall (30) forms a lateral upright (34) curving in the direction of a bottom (21) of the lid (7).

4. Lid (7) according to claim 3, **characterised in that** the lateral upright (34) has a curved portion (35) forming a bottom opening (36).

5. Lid (7) according to claim 4, **characterised in that** the external wall (40) extends in the bottom opening (36) in line with the internal wall (30).

6. Lid (7) according to any of claims 1 to 5, **characterised in that** the internal wall (30) and forms part of a moulded piece.

7. Lid (7) according to claim 6, **characterised in that** the internal wall (30) is produced from plastics material.

8. Lid (7) according to any of claims 1 to 7, **characterised in that** the lid (7) comprises a bottom wall (22) and can be disposed in a turned-over position on the bottom wall (22).

9. Lid (7) according to any of claims 1 to 8, **characterised in that** the lid (7) has at least three internal tenons (20) issuing from the external wall (40), and preferably three internal tenons (20).

10. Domestic electrical appliance for producing food and/or cosmetic preparations, comprising a housing (1) supporting a working receptacle (4) receiving a rotary working tool (5), as well as a removable lid (7) mounted on the housing (1), the housing (1) containing a motor (2) for driving the rotary working tool (5), the lid (7) comprising at least one internal tenon (20) for controlling the functioning of the motor (2) when the lid (7) fits on top of the working receptacle (4), the lid (7) being able to move on the housing (1) between an idle position in which the motor (2) is stopped and a control position in which the motor (2) is in operation, **characterised in that** the lid (7) is in accordance with one of claims 1 to 9.

11. Domestic electrical appliance according to claim 10, **characterised in that** the housing (1) comprises at least one elastic return element (8) for moving the lid (7) away from the control position.

12. Domestic electrical appliance according to claim 11, **characterised in that** the idle position of the lid (7) is a raised position and **in that** the control position of the lid (7) is a lowered position.

13. Domestic electrical appliance according to claim 12, in which the lid (7) is in accordance with claim 9, **characterised in that** the lid (7) in the idle position rests on a ring (10) arranged in the housing (1), **in that** the ring (10) is mounted so as to be able to move against said elastic return element (8), and **in that** a vertical pressure exerted manually on the lid (7) moves the ring (10) in order to actuate a switch (11) and control the starting of the motor (2).

14. Domestic electrical appliance according to any of claims 10 to 13, **characterised in that** the rotary working tool (5) is secured to the working receptacle (4).

15. Method for obtaining a lid (7) of a domestic electrical appliance for producing food and/or cosmetic preparations according to any of claims 1 to 9, comprising the following steps:
- moulding an annular internal wall (30) of the lid (7) having at least one passage (31) passing through said internal wall (30),
- moulding an external wall (40) around the internal wall (30) with the creation of at least one internal tenon (20) issuing from the external wall (40) and extending through the passage (31) beyond the internal wall (30).
